# EUROPEAN PATENT APPLICATION

(11) **EP 4 733 623 A1**
(43) Date of publication of application: **29.04.2026**
(21) Application number: 24825836.0
(22) Date of filing: 14.06.2024
(51) Int. Cl.: F16G 13/06

(54) **CHAIN**

(30) Priority: 20.06.2023 JP 2023100695
(71) Applicant: Tsubakimoto Chain Co., Osaka-shi, Osaka 530-0005 (JP)
(72) Inventor: KAMEI Takayuki, Osaka-shi, Osaka 530-0005 (JP); KAWAGUCHI Hiroaki, Osaka-shi, Osaka 530-0005 (JP)
(74) Representative: Keenway Patentanwälte Neumann Heine Taruttis
(86) International application number: PCT/JP2024/021689
(87) International publication number: WO 2024/262433

(57) **Abstract**

A chain (11) includes pairs of inner link plates (14), pairs of outer link plates (15), bushings (16), and pins (18). Each inner link plate (14) includes two through-holes (14a). Each bushing (16) is inserted into the through-holes (14a) of the inner link plates (14) in the corresponding pair. Each pin (18) is rotatably inserted into the corresponding bushing (16). The inner link plates (14) each include a taper (14a1) at an opening end of each of the two through-hole (14a) facing the outer link plate. A ratio (B/A) of a depth (B) of the taper to a distance (A) between centers of the two through-holes (14a) in each of the inner link plates (14) is between 0.9% and 6%, inclusive.

## Description

### TECHNICAL FIELD

The present disclosure relates to a chain.

### BACKGROUND ART

Patent Literature 1 discloses a chain.

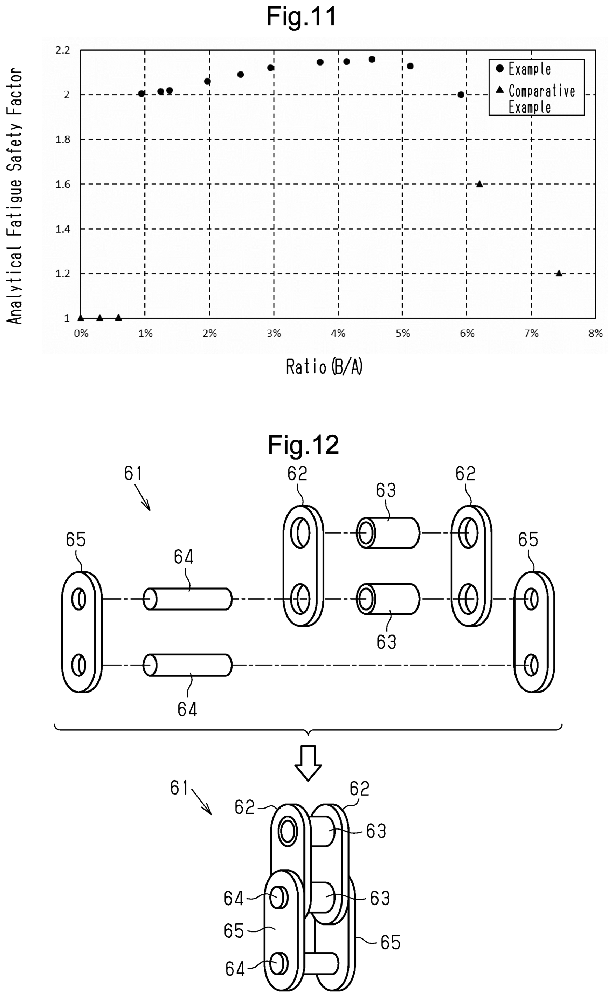

As shown in Fig. 12, the chain 61 includes a pair of inner link plates 62, a pair of bushings 63 press-fitted into the respective inner link plates 62, connecting pins 64 loosely fitted in the bushings 63, and a pair of outer link plates 65 into which the connecting pins 64 are press-fitted. The chain 61 is constructed by successively arranging a plurality of units each including the above components.

### CITATION LIST

### Patent Literature

Patent Literature 1: JP2006-105325A

### SUMMARY OF INVENTION

### Technical Problem

It is desirable that the chain 61 disclosed in Patent Literature 1 or the like have excellent durability. In order to achieve excellent durability, improvement in fatigue performance is required.

### Solution to Problem

A chain according to an aspect of the present disclosure includes pairs of inner link plates and pairs of outer link plates alternately arranged in a lengthwise direction of the chain, cylindrical bushings, and pins. The inner link plates in each of the pairs face each other. The inner link plates each include two through-holes. The bushings are each inserted into the through-holes of the inner link plates in a corresponding one of the pairs. The pins are each rotatably inserted into a corresponding one of the bushings. The outer link plates in each of the pairs sandwich two adjacent pairs of the inner link plates in the lengthwise direction. The outer link plates in each of the pairs are arranged at opposite ends of a corresponding one of the pins. The bushings and the pins are arranged such that two of the pins are located between the outer link plates in each of the pairs. The inner link plates each include a taper at an opening end of each of the two through-holes that faces the outer link plate. A ratio (B/A) of a depth (B) of the taper to a distance (A) between centers of the two through-holes in each of the inner link plates is between 0.9% and 6%, inclusive.

### BRIEF DESCRIPTION OF DRAWINGS

[Fig. 1] Fig. 1 is an exploded perspective view schematically showing part of a chain according to a first embodiment.
[Fig. 2] Fig. 2 is a cross-sectional view schematically showing part of the chain of the first embodiment.
[Fig. 3] Fig. 3 is a perspective view of an inner link plate.
[Fig. 4] Fig. 4 is a partial cross-sectional view taken along line 4-4 of Fig. 3.
[Fig. 5] Fig. 5 is an exploded perspective view schematically showing part of a chain according to a modification.
[Fig. 6] Fig. 6 is a cross-sectional view schematically showing part of the chain according to the modification.
[Fig. 7] Fig. 7 is a perspective view of an inner link plate of the second embodiment.
[Fig. 8] Fig. 8 is a partial cross-sectional view taken along line 8-8 of Fig. 7.
[Fig. 9] Fig. 9 is a perspective view of an inner link plate of another modification.
[Fig. 10] Fig. 10 is a perspective view of an inner link plate of a further modification.
[Fig. 11] Fig. 11 is a graph showing the fatigue performance of the chains of examples and comparative examples.
[Fig. 12] Fig. 12 is an exploded perspective view and a perspective view of part of a prior-art chain.

### DESCRIPTION OF EMBODIMENTS

### First Embodiment

A first embodiment of a chain according to the present disclosure will now be described.

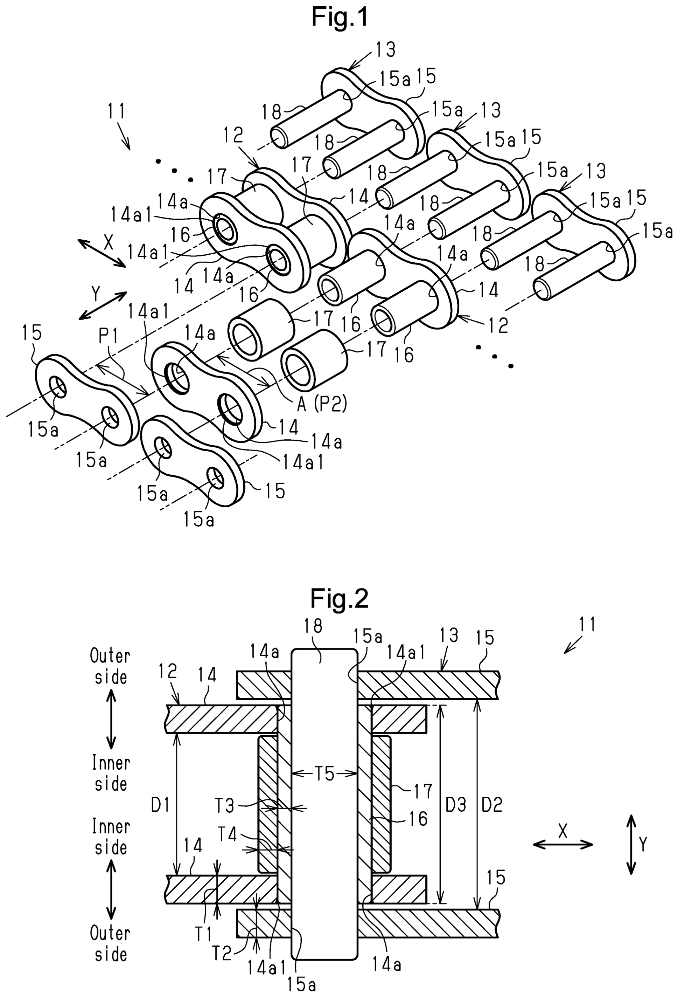

As shown in Figs. 1 and 2, a chain 11 of the first embodiment includes inner links 12 and outer links 13 that are arranged in a lengthwise direction X of the chain 11. The inner links 12 and the outer links 13 are alternately arranged in the lengthwise direction X.

Each inner link 12 includes a pair of inner link plates 14. The inner link plates 14 in a pair face each other with an interval D1 in a widthwise direction Y, which is orthogonal to the lengthwise direction X of the chain 11. Further, each inner link 12 includes a cylindrical bushing 16 and a cylindrical roller 17. The bushing 16 is located between the inner link plates 14 in a pair to connect the inner link plates 14 to each other. The roller 17 is rotatably fitted onto the bushing 16.

Each outer link 13 includes a pair of outer link plates 15. The outer link plates 15 in the pair face each other with an interval D2 in the widthwise direction Y, which is orthogonal to the lengthwise direction X of the chain 11. Each outer link 13 further includes a rod-shaped pin 18 that is rotatably inserted into the corresponding bushing 16. The outer link plates 15 in a pair are positioned at opposite ends of the pin 18 to sandwich two adjacent pairs of inner link plates 14 in the lengthwise direction X. Two pins 18 are located between the outer link plates 15 in each pair. Thus, multiple pairs of inner link plates 14 and multiple pairs of outer link plates 15 are alternately arranged in the lengthwise direction X. A distance P1 between the axes of adjacent pins 18 in each pair of outer link plates 15 adjacent in the lengthwise direction X is not particularly limited, and is, for example, between 1 mm and 100 mm, inclusive. Similarly, a distance P2 between the axes of adjacent pins 18 in two pairs of outer link plates 15 adjacent in the lengthwise direction X is not particularly limited, and is, for example, between 1 mm and 100 mm, inclusive. Hereinafter, the distance P1 or P2 between the axes of adjacent pins 18 may also be referred to as the pitch of the chain 11.

The chain 11 will now be described in detail.

### <Inner Link Plate>

As shown in Figs. 1 and 2, each inner link plate 14 is formed as a plate. The opposite longitudinal ends of the inner link plate 14 are semicircular, with the outer longitudinal sides being convex. The longitudinally central portion of the inner link plate 14 has a curved constricted shape that narrows inward from the opposite transverse ends of the inner link plate 14.

The inner link plate 14 includes a pair of through-holes 14a, one at each of the opposite longitudinal ends across the longitudinally central portion. In other words, the inner link plate 14 includes two through-holes 14a aligned with each other in the longitudinal direction of the inner link plate 14.

The distance between the centers of the two through-holes 14a of the inner link plate 14 is equal to the distance P2 between the axes of adjacent pins 18 of two pairs of outer link plates 15 adjacent to each other in the lengthwise direction X. Hereinafter, the distance between the centers of the two through-holes 14a of the inner link plate 14 is also referred to as the distance (A).

The distance between the centers of the adjacent through-holes 14a in two inner link plates 14 adjacent to each other in the lengthwise direction X is equal to the distance P1 between the axes of the adjacent pins 18 in each pair of outer link plates 15.

Referring to Fig. 2, a thickness T1 of the inner link plate 14 is not particularly limited, but is preferably between 0.1 mm and 80 mm, inclusive.

The width of the inner link plate 14 refers to the transverse length of the inner link plate 14, namely, the transverse length of the widest part excluding the constricted portion.

The inner diameter of each through-hole 14a of the inner link plate 14 is slightly smaller than the outer diameter of a circumferential wall of the bushing 16, which will be described later.

As described below, when opposite ends of the bushing 16 are respectively press-fitted into the through-holes 14a of the two inner link plates 14 forming a pair, the inner link plates 14 are opposed to each other and spaced apart by the interval D1.

The interval D1 between the inner link plates 14 in each pair is not particularly limited, but is preferably between 0.6 mm and 55 mm, inclusive.

As shown in Fig. 2, the direction in which the inner link plates 14 in a pair face each other is hereinafter referred to as the inner side of the chain 11, and the opposite direction is hereinafter referred to as the outer side of the chain 11.

As shown in Figs. 1 to 4, for each inner link plate 14, the two through-holes 14a are respectively provided with tapers 14a1. Each taper 14a1 extends over the entire circumference at an outer opening end of the corresponding through-hole 14a facing the outer link plate 15. By contrast, no taper 14a1 is provided at an inner opening end of the through-hole 14a. The inner surface of the inner link plate 14 is flat.

Since the taper 14a1 extends over the entire circumference of the opening end of the through-hole 14a, the inner diameter of the through-hole 14a at the opening end is slightly larger than the inner diameter of the through-hole 14a at a portion other than the opening end.

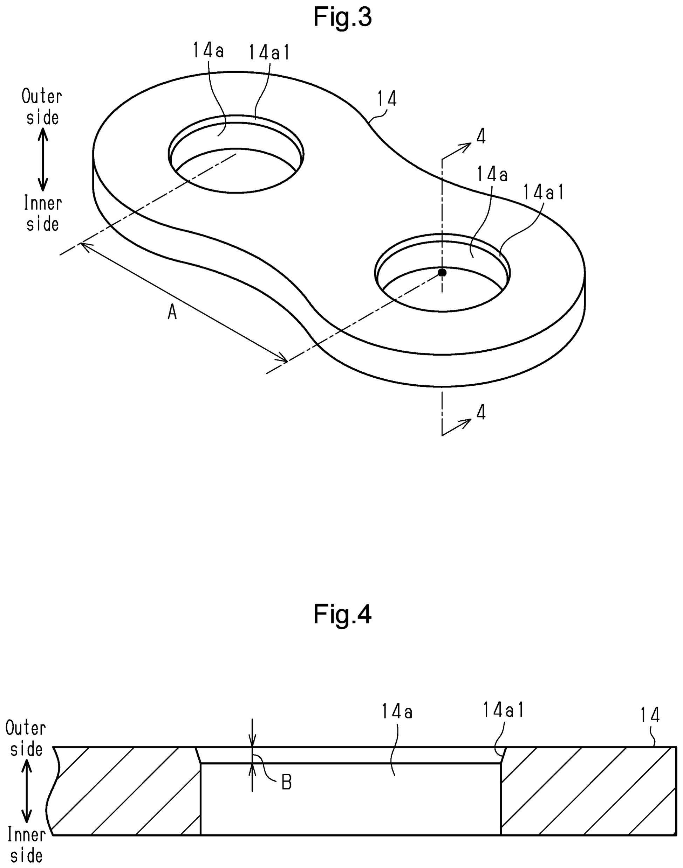

As shown in Fig. 4, a depth (B) of the taper 14a1 extending from the outer surface of the inner link plate 14 toward the inner side of the inner link plate 14 is not particularly limited.

A ratio (B/T1) of the depth (B) of the taper 14a1 to the thickness T1 of the inner link plate 14 is not particularly limited, but is preferably between 6% and 50%, inclusive, and more preferably between 20% and 40%, inclusive.

The inclination angle of the taper 14a1 with respect to the thickness direction of the inner link plate 14, that is, the angle of the taper 14a1 when the thickness direction of the inner link plate 14 is taken as a 0° reference, is not particularly limited. The angle of the taper 14a1 is preferably between 10° and 70°, inclusive, more preferably between 20° and 60°, inclusive, and still more preferably between 30° and 50°, inclusive. The angle of the taper 14a1 may be, for example, 45°.

The ratio (B/A) of the depth (B) of the taper 14a1 to the distance (A) between the centers of the two through-holes 14a in each inner link plate 14 is between 0.9% and 6%, inclusive. The ratio (B/A) is preferably between 2% and 5.5%, inclusive, and more preferably between 3% and 5%, inclusive.

### <Outer Link Plate>

As shown in Figs. 1 and 2, each outer link plate 15 is formed as a plate. The opposite longitudinal ends of the outer link plate 15 are semicircular, with the outer longitudinal sides being convex. The longitudinally central portion of the outer link plate 15 has a curved constricted shape that narrows inward from the opposite transverse ends of the outer link plate 15.

The outer link plate 15 includes a pair of pin insertion holes 15a, one at each of the opposite longitudinal ends across the longitudinally central portion. In other words, the outer link plate 15 includes two pin insertion holes 15a aligned with each other in the longitudinal direction of the outer link plate 15.

Although not particularly limited, a thickness T2 of the outer link plate 15 is preferably equal to the thickness T1 of the inner link plate 14.

Although not particularly limited, the outer link plate 15 preferably has the same width as the inner link plate 14.

The inner diameter of the pin insertion hole 15a is slightly smaller than a diameter T5 of the pin 18, which will be described later.

As described below, when opposite ends of the pin 18 are respectively press-fitted into the pin insertion holes 15a of the two outer link plates 15 forming a pair, the outer link plates 15 are opposed to each other and spaced apart by the interval D2 in the widthwise direction Y, which is orthogonal to the lengthwise direction X of the chain 11. The interval D2 may also be referred to as the separation distance between two outer link plates 15.

Although not particularly limited, the interval D2 between two outer link plates 15 is slightly greater than a separation distance D3 between the outer surfaces of two inner link plates 14.

The interval D2 between two outer link plates 15 is not particularly limited, but is preferably between 0.45 mm and 85 mm, inclusive.

### <Bushing>

As shown in Figs. 1 and 2, each bushing 16 is cylindrical. Specifically, the bushing 16 includes a cylindrical circumferential wall in a cross-section taken along the radial direction.

The bushing 16 is separate from a pair of inner link plates 14, and its two axial ends are respectively press-fitted into the through-holes 14a of the inner link plates 14.

The thickness of the bushing 16, that is, a thickness T3 of the circumferential wall of the bushing 16, is not particularly limited, but is preferably between 0.05 mm and 5 mm, inclusive.

The outer diameter of the bushing 16, that is, the outer diameter of the circumferential wall of the bushing 16 is not particularly limited, but is preferably between 0.4 mmm and 45 mm.

The inner diameter of the bushing 16, that is, the inner diameter of the circumferential wall of the bushing 16 is not particularly limited, but is preferably between 0.3 mm and 35 mm.

The length of the bushing 16 is not particularly limited, but is preferably equal to or slightly smaller than the separation distance D3 between the outer sides of two inner link plates 14.

### <Roller>

As shown in Figs. 1 and 2, each roller 17 is cylindrical. Specifically, the roller 17 includes a cylindrical circumferential wall in a cross-section taken along the radial direction.

The roller 17 is rotatably fitted onto the bushing 16. Specifically, the inner diameter of the circumferential wall of the roller 17 is greater than the outer diameter of the circumferential wall of the bushing 16, and thus the roller 17 is loosely fitted to the bushing 16.

The height of the roller 17, that is, a thickness T4 of the circumferential wall of the roller 17, is not particularly limited, but is preferably between 0.1 mm and 7 mm, inclusive.

The outer diameter of the roller 17, that is, the outer diameter of the circumferential wall of the roller 17 is not particularly limited, but is preferably between 0.6 mm and 55 mm, inclusive.

The inner diameter of the roller 17, that is, the inner diameter of the circumferential wall of the roller 17 is not particularly limited, but is preferably between 0.4 mm and 45 mm.

The length of the roller 17, that is, the axial length of the circumferential wall of the roller 17 is slightly smaller than the interval D1 between two inner link plates 14.

### <Pin>

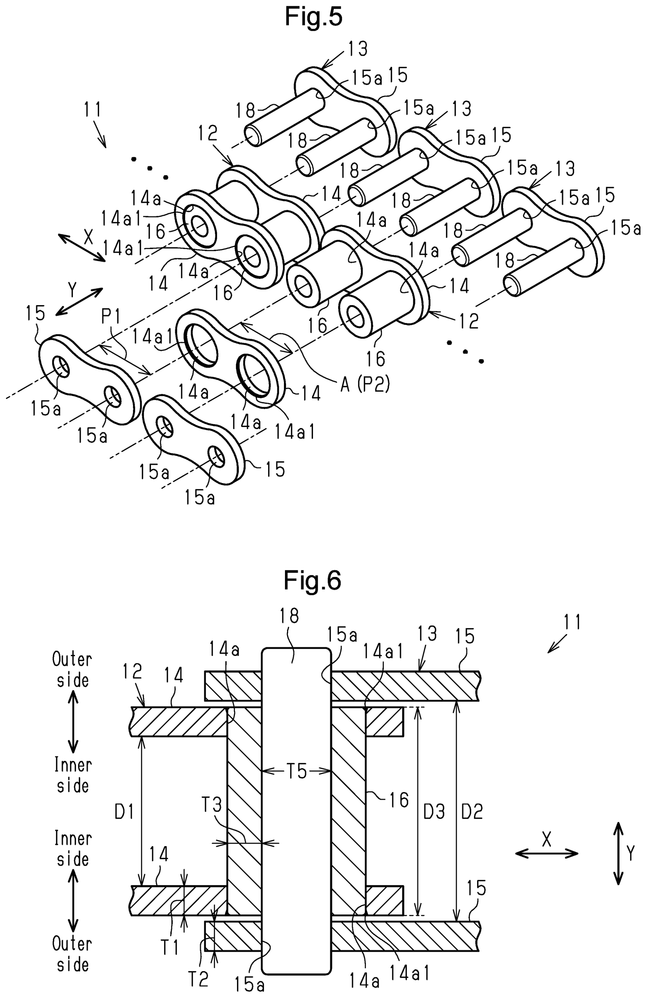

As shown in Figs. 1 and 2, each pin 18 is rod-shaped. Specifically, the pin 18 has a round columnar shape in a cross-section taken along the radial direction. In Figs. 2 and 6, the pin 18 is shown in side view.

Two axial ends of the pin 18 are respectively inserted into the pin insertion holes 15a of the outer link plates 15 so that the pin 18 is press-fitted into the pin insertion holes 15a. Further, the two axial ends of the pin 18 each include a tip projecting out of the pin insertion hole 15a of the outer link plate 15 in the widthwise direction Y of the chain 11.

The pin 18 is rotatably inserted into the bushing 16. That is, the diameter T5 of the pin 18 is smaller than the inner diameter of the through-hole 14a of the inner link plate 14 and the inner diameter of the circumferential wall of the bushing 16. The pin 18 is rotatable inside the bushing 16.

The diameter T5 of the pin 18 is not particularly limited, but is preferably between 0.3 mm and 35 mm, inclusive.

The length of the pin 18 is not particularly limited, but is preferably between 1.4 mm and 350 mm, inclusive.

The upper limits of the distances P1 and P2 between the axes of two adjacent pins 18, that is, the upper limits of the pitches, are not particularly limited, but are preferably, for example, 90 mm. The lower limit of each pitch is not particularly limited, but is preferably, for example, 0.9 mm.

The materials of the components of the chain 11 will now be described.

### <Materials of Chain Components>

Although not particularly limited, the components of the chain 11, namely, the inner link plate 14, the outer link plate 15, the bushing 16, the roller 17, and the pin 18, may be formed from a known material.

Examples of the known material include metal and plastic. Of these materials, metal is preferred because it increases mechanical strength.

A method for manufacturing the chain 11 will now be described.

### Method for Manufacturing the Chain

The method for manufacturing the chain 11 includes a forming step that forms a sheet (e.g., a metal sheet) into a predetermined shape, and a coupling step that couples the components obtained by the forming step to each other. Each step will now be described.

### (Forming Step)

In the forming step, each component is formed using a sheet (e.g., a metal sheet).

To form the inner link plate 14 and the outer link plate 15, the sheet is, for example, punched into a predetermined shape. The through-hole 14a of the inner link plate 14 and the pin insertion hole 15a of the outer link plate 15 can also be formed through punching. At the same time as the formation of the through-hole 14a, the taper 14a1 can also be formed at the outer opening end of the through-hole 14a. As shown in Fig. 4, the taper 14a1 is formed with the opening end being chamfered.

To form the bushing 16 or the roller 17, the sheet is, for example, punched into the predetermined shape and then bent into a cylindrical shape. In other words, the sheet is curled into a cylindrical shape. Further, after being curled, the ends of the sheet are joined to each other. Joining the ends of the sheet means bringing the ends of the sheet into contact with each other.

To form the pin 18, a metal rod material is, for example, drawn and then cut to a predetermined length.

After the forming step, a heat treatment step (e.g., quenching) may be performed.

### (Coupling Step)

In the coupling step, the components obtained by the forming step are coupled to each other to form the chain 11.

Referring to Figs. 1 and 2, first, multiple inner link plates 14 are prepared. Then, the bushings 16 are respectively press-fitted into the two through-holes 14a of each inner link plate 14.

The bushing 16 is press-fitted from the inner opening end of each of the two through-holes 14a of the inner link plate 14, where the taper 14a1 is absent. The bushing 16 is coupled to the inner link plate 14, with one axial end press-fitted into the through-hole 14a. Preferably, one end of the bushing 16 is fitted in the through-hole 14a such that it does not protrude outward.

Next, the rollers 17 are respectively fitted onto the bushings 16, which are coupled to each inner link plate 14, from the other ends of the bushings 16. Further, another inner link plate 14 is coupled to the bushings 16, onto which the rollers 17 are fitted, from the other ends of the bushings 16. Specifically, the other ends of the bushings 16, onto which the rollers 17 are fitted, are respectively press-fitted into the two through-holes 14a of another inner link plate 14 on the sides of the opening ends, where the tapers 14a1 are absent. Preferably, the other end of the bushing 16 is fitted in the through-hole 14a such that it does not protrude outward.

The above steps are performed to obtain an inner link 12. One end and the other end of each bushing 16 are respectively press-fitted into the through-holes 14a of the inner link plates 14 in a pair. Accordingly, the through-holes 14a of the inner link plates 14 in a pair are connected to each other by the bushings 16. The above steps are repeated to obtain multiple inner links 12.

Next, two outer link plates 15 are prepared. Then, two pins 18 are respectively press-fitted into the two pin insertion holes 15a of each outer link plate 15. Thus, each pin 18 is coupled to the outer link plate 15, with the tip of its axial end projecting out of the pin insertion hole 15a.

Next, two inner links 12 obtained through the above steps are prepared. One of the two pins 18 coupled to the outer link plate 15 is inserted into the bushing 16 of one of the two inner links 12.

The other one of the two pins 18 coupled to the outer link plate 15 is inserted into the bushing 16 of the other one of the two inner links 12. Further, another outer link plate 15 is coupled to the two pins 18, which are respectively inserted into the bushings 16 of the two inner links 12. Specifically, the other ends of the two pins 18, which are inserted into the bushings 16 of the two inner links 12, are respectively press-fitted into the two pin insertion holes 15a of another outer link plate 15.

Through the above steps, two pins 18 respectively inserted into the pin insertion holes 15a are joined to the two outer link plates 15 forming a pair. As a result, an outer link 13 is obtained. In this case, two inner links 12 are connected to each other by one outer link 13.

The above steps are repeated to connect multiple inner links 12 to multiple outer links 13 such that they are alternately arranged in the lengthwise direction X. Further, the inner links 12 and the outer links 13, which are alternately arranged in the lengthwise direction X, are connected to form the entire chain 11 into a loop.

The above steps are performed to obtain the chain 11. The components of the chain 11 may be coupled to each other in any order.

### <Operation and Advantages>

The operation of the chain 11 according to the first embodiment will now be described.

During use of the chain 11, the through-hole 14a of the inner link plate 14 is stressed directly from the bushing 16, which is press-fitted into the through-hole 14a, or indirectly from the pin 18, which is inserted into the bushing 16. The stress tends to concentrate on the opening end of the through-hole 14a of the inner link plate 14 facing the outer link plate 15.

As shown in Figs. 3 and 4, the inner link plate 14 of the first embodiment includes the taper 14a1 at the outer opening end of the through-hole 14a. This limits the concentration of stress on the opening end of the through-hole 14a. In particular, the ratio (B/A) of the depth (B) of the taper 14a1 to the distance (A) between the centers of the two through-holes 14a of the inner link plate 14 is between 0.9% and 6%, inclusive. This improves the fatigue performance of the chain 11 even in a chain 11 having a different distance (A).

If the through-hole 14a includes the taper 14a1, it tends to reduce press-out force of the bushing 16 in the through-hole 14a of the inner link plate 14. In the chain 11 of the present embodiment, the ratio (B/T1) of the depth (B) of the taper 14a1 to the thickness T1 of the inner link plate 14 is between 6% and 50%, inclusive. This limits a decrease in the press-out force of the bushing 16 in the through-hole 14a.

The advantages of the chain 11 according to the first embodiment will now be described.

(1-1) The chain 11 includes multiple pairs of inner link plates 14 and multiple pairs of outer link plates 15, which are alternately arranged in the lengthwise direction X, multiple cylindrical bushings 16, and multiple pins 18. The inner link plates 14 in each pair face each other. Each inner link plate 14 includes two through-holes 14a. The bushings 16 are each inserted into the through-holes 14a of the inner link plates 14 in the corresponding pair. Each pin 18 is rotatably inserted into the corresponding bushing 16. The outer link plates 15 in each pair are arranged to sandwich two pairs of inner link plates 14 adjacent to each other in the lengthwise direction X. Each pair of outer link plates 15 is arranged at the opposite ends of the corresponding pin 18. Multiple bushings 16 and multiple pins 18 are arranged such that two pins 18 are located between the outer link plates 15 in each pair. Each inner link plate 14 includes the taper 14a1 at the opening end of the through-hole 14a facing the outer link plate 15. The ratio (B/A) of the depth (B) of the taper 14a1 to the distance (A) between the centers of the two through-holes 14a in the inner link plate 14 is between 0.9% and 6%, inclusive.

Thus, the fatigue performance of the chain 11 is improved. The improvement in the fatigue performance provides the chain 11 with excellent durability.

(1-2) The arrangement of the taper 14a1 at the through-hole 14a of the inner link plate 14 allows lubricating oil to be stored in a gap between the taper 14a1 and the bushing 16. For example, of the lubricating oil applied between the bushing 16 and the pin 18, lubricating oil that has flowed out from between them is retained in the gap. This prevents lubricating oil from flowing out of the chain 11, thereby facilitating a reduction in wear between the bushing 16 and the pin 18.

### <Second Embodiment>

A chain according to a second embodiment of the present disclosure will now be described.

Hereinafter, components different from those of the chain 11 of the first embodiment will be described. Thus, the same components will not be described.

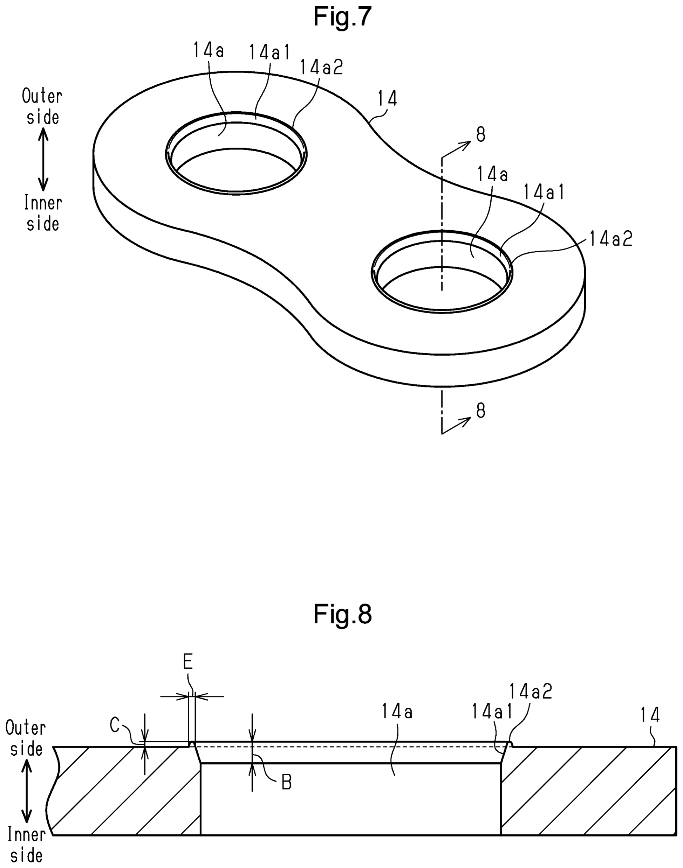

As shown in Figs. 7 and 8, the inner link plate 14 includes a projection 14a2 in the vicinity of the taper 14a1. Specifically, the inner link plate 14 includes the projection 14a2 located so as to cover the entire circumference of the taper 14a1, the projection 14a2 being formed continuously with the taper 14a1. The phrase "continuously with the taper 14a1" means that the projection 14a2 is located on an extension of the surface of the taper 14a1. The projection 14a2 protrudes outward from the inner link plate 14 in the thickness direction of the inner link plate 14.

As shown in Fig. 8, in the cross-sectional view of the inner link plate 14, the projection 14a2 has a semicircular cross-sectional shape with its outer side convex. The projection 14a2 may have a completely semicircular cross-sectional shape, or a substantially semicircular cross-sectional shape with its outer side smoothly convex. Further, the projection 14a2 does not need to have a semicircular shape, and may have any cross-sectional shape with its outer side convex.

A ratio (C/A) of a height (C) of the projection to the distance (A) between the centers of the two through-holes in the inner link plate is not particularly limited, but is preferably between 0.05% and 0.9%, inclusive. The ratio (C/A) is more preferably between 0.1% and 0.5%, inclusive, and still more preferably between 0.15% and 0.35%, inclusive.

A width E of the projection 14a2 extending in the radial direction of the through-hole 14a is not particularly limited, but is preferably between 0.05 mm and 3 mm, inclusive, and more preferably between 0.1 mm and 1 mm, inclusive.

The projection-forming step of the method for manufacturing the chain of the first embodiment allows the projection 14a2, which is continuous with the taper 14a1, to be formed simultaneously with the taper 14a1 by punching. For example, to form the taper 14a1, punching may be performed under conditions that cause the periphery of the taper 14a1 to rise, thereby simultaneously forming the taper 14a1 and the projection 14a2. The projection 14a2 may be formed using any method (e.g., thermal spraying, welding, or forging) without particular limitation.

### <Operation and Advantages>

The operation of the chain 11 according to the second embodiment will now be described.

The chain 11 of the second embodiment has the following advantages in addition to those of the chain 11 of the first embodiment.

The projection 14a2 protrudes outward from the inner link plate 14 in the thickness direction of the inner link plate 14. This prevents excessive interference between the inner link plate 14 and the outer link plate 15. That is, the outer surface of the inner link plate 14 and the inner surface of the outer link plate 15 are not in surface contact, but are in point contact or line contact at the top of the projection 14a2. This reduces the contact area between the outer surface of the inner link plate 14 and the inner surface of the outer link plate 15, thereby reducing heat generation caused by friction between them. Reducing heat generation enhances the wear resistance of the chain.

The ratio (C/A) of the height (C) of the projection 14a2 to the distance (A) between the centers of the two through-holes 14a in each inner link plate 14 is between 0.05% and 0.9%, inclusive. This prevents excessive interference between the inner link plate 14 and the outer link plate 15 even in a chain 11 that has a different distance (A).

The advantages of the chain 11 according to the second embodiment will now be described.

(2-1) The inner link plate 14 includes the projection 14a2, which is formed continuously with the taper 14a1, on its surface facing the outer link plate 15. The arrangement of the projection 14a2 prevents excessive interference between the inner link plate 14 and the outer link plate 15. This enhances the wear resistance of the chain 11. Further, since sliding contact between the inner link plate 14 and the outer link plate 15 is reduced, noise produced by the chain 11 is also reduced.

(2-2) The projection 14a2 is continuous with the taper 14a1. This allows the projection 14a2 to be used as part of the taper 14a1. In addition, forming the projection 14a2 simultaneously with the taper 14a1 improves the efficiency of manufacturing the chain 11.

(2-3) The inner link plate 14 includes the taper 14a1 along the entire circumference of the opening end of the through-hole 14a facing the outer link plate 15. The inner link plate 14 further includes the projection 14a2, which is located so as to cover the entire circumference of the taper 14a1. By providing the taper 14a1 and the projection 14a2 around the entire circumference of the through-hole 14a, the advantages of the second embodiment are achieved over the entire circumference of the through-hole 14a.

(2-4) The ratio (C/A) of the height (C) of the projection 14a2 to the distance (A) between the centers of the two through-holes 14a in each inner link plate 14 is between 0.05% and 0.9%, inclusive. This prevents excessive interference between the inner link plate 14 and the outer link plate 15, which is located outside the inner link plate 14. This enhances the wear resistance of the chain 11.

### Modifications

- The first and second embodiments (hereinafter also referred to as the present embodiments) may be modified as follows, for example. The present embodiment and the following modifications can be combined if the combined modifications remain technically consistent with each other.
- In the present embodiment, the chain 11 includes the rollers 17, but does not have to include the rollers 17.

As shown in Figs. 5 and 6, for example, the rollers 17 may be omitted from the chain 11. In this case, the inner links 12 of the chain 11 may each include a pair of inner link plates 14 and bushings 16 located between the inner link plates 14 in the pair.
- In the present embodiment, the inner link plate 14 includes the projection 14a2, which is formed continuously with the taper 14a1, on its surface facing the outer link plate 15. However, this configuration does not have to be employed.

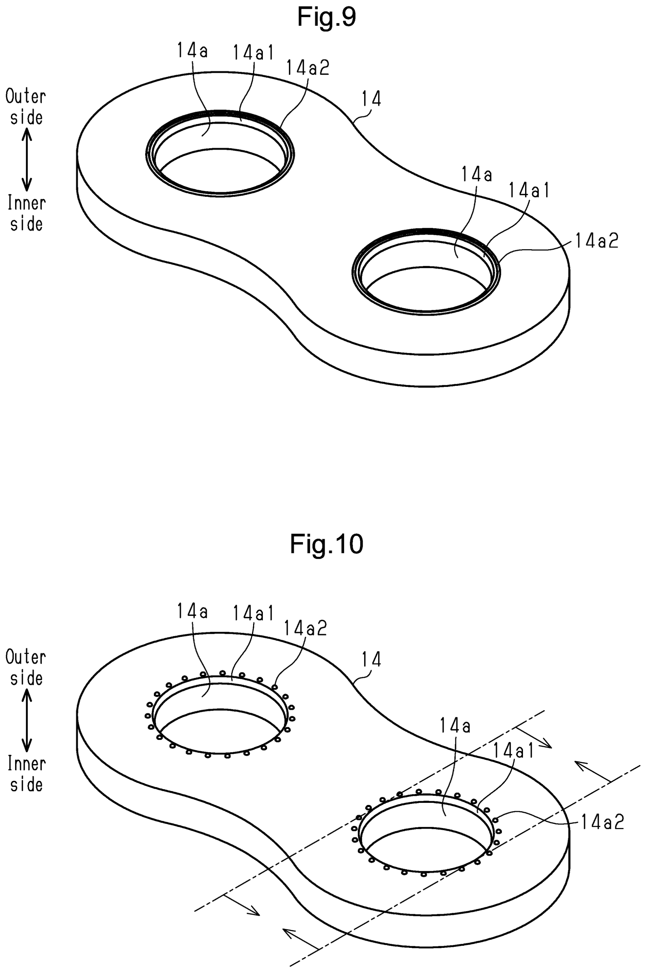

As shown in Fig. 9, on the surface facing the outer link plate 15, the inner link plate 14 may include the projection 14a2 in the vicinity of the taper 14a1 but at a distance from the periphery of the taper 14a1. By arranging the projection 14a2 at a distance from the periphery of the taper 14a1, the taper 14a1 and the projection 14a2 are readily formed as separate structures. Separate formation of the taper 14a1 and the projection 14a2 improves the dimensional accuracy of each component.
- The projection 14a2 does not have to be continuously formed along the periphery of the taper 14a1.

Alternatively, as shown in Fig. 10, for example, projections 14a2 may be formed discontinuously and spaced apart from the periphery of the taper 14a1. In Fig. 10, the projections 14a2 are dome-shaped (hemispherical). Discontinuous formation of the projections 14a2 allows the projections 14a2 to be selectively positioned so as to produce greater effects.

As shown in Fig. 10, the projection 14a2 is preferably located in a region corresponding to the inner diameter of the through-hole 14a that includes the taper 14a1 in the longitudinal direction of the inner link plate 14 and in a region including lateral opposite sides of the inner link plate 14 (i.e., inside the broken line indicated by the arrow in Fig. 10). This region is prone to wear during use of the chain 11. Thus, if the projection 14a2 is arranged at least in this region, wear of the inner link plate 14 and the outer link plate 15 is more readily limited.
- In the present embodiment, the through-hole 14a of the inner link plate 14 includes the taper 14a1 and the projection 14a2 only at the outer opening end. However, this configuration does not have to be employed. In addition to the outer opening end, the inner opening end may also include the taper 14a1 and the projection 14a2. That is, the inner link plate 14 may have the same shape on its outer side and inner side.
- When the through-hole 14a of the inner link plate 14 is formed by punching, the taper 14a1 may be provided on a fractured surface of the through-hole 14a or on a sheared surface of the through-hole 14a.
- In the present embodiment, the taper 14a1 extends over the entire circumference of the opening end on the outer side of the through-hole 14a. However, this configuration does not have to be employed. The taper 14a1 may be formed at part of the opening end on the outer side of the through-hole 14a.
- The ratio (B/T1) of the depth (B) of the taper 14a1 to the thickness T1 of the inner link plate 14 does not have to be between 6% and 50%, inclusive. The ratio (B/T1) may be less than 10% or may be greater than 50%.
- In the present embodiment, the taper 14a1 is shaped by chamfering the opening end of the through-hole 14a, but does not have to be shaped in this manner. The shape of the taper 14a1 may be changed. For example, the taper 14a1 may be shaped by rounding the opening end of the through-hole 14a or may have a stepped shape.
- In the present embodiment, the bushing 16 is press-fitted into the through-hole 14a of the inner link plate 14. However, this configuration does not have to be employed. The bushing 16 may be welded to the wall of the through-hole 14a of the inner link plate 14, or adhered to the wall of the through-hole 14a using adhesive. In the same manner, the pin 18 may be coupled to the wall of the pin insertion hole 15a of the outer link plate 15.
- A chain that is different from the chain 11 of the present embodiment may be employed. This chain does not have to include the taper 14a1 at the outer opening end of the through-hole 14a of the inner link plate 14, and may have the projection 14a2 formed continuously with the opening end or in the vicinity of the opening end.

### Examples

The following examples are provided to further illustrate the configuration and advantages of the present disclosure, but the present disclosure is not limited to these examples.

### (Example 1)

An inner link plate 14 was produced with the thickness T1 of 3.15 mm, the inner diameter of each through-hole 14a of 11.25 mm, the distance (A) of 25.4 mm between the centers of the two through-holes 14a, and the taper 14a1 at the outer opening end of each through-hole 14a. The depth (B) of the taper 14a1 was 0.24 mm, and the ratio (B/A) was 0.94%. The inner link plate 14 included the projection 14a2 continuous with the taper 14a1, with the height (C) of the projection 14a2 being 0.025 mm, the ratio (C/A) being 0.1%, and the width (E) of the projection 14a2 being 1.6 mm.

The outer link plate 15 was produced with the thickness T2 of 3.15 mm, the inner diameter of each pin insertion hole 15a of 7.85 mm, and a center-to-center distance between the two pin insertion holes 15a of 25.4 mm.

The bushing 16 was produced with a circumferential wall thickness of 1.65 mm, an inner diameter of 8.1 mm, an outer diameter of 11.4 mm, and a length of 22.6 mm.

The roller 17 was produced with a circumferential wall thickness of 2.2 mm, an inner diameter of 11.5 mm, an outer diameter of 15.9 mm, and a length of 15.6 mm.

The pin 18 was produced with a diameter of 7.9 mm and a length of 32.5 mm.

The chain 11 was produced by assembling multiple sets of the above components.

### (Examples 2 to 12, Comparative Examples 1 to 6)

A chain was produced in the same manner as in Example 1, except that the depth (B) of the taper 14a1 and the ratio (B/A) were changed as shown in Table 1.

### (Evaluation of Fatigue Performance)

The chains of Examples 1 to 7 and 9 to 12 and Comparative Examples 1 to 5 were evaluated for fatigue performance. Specifically, evaluation was made of the influence of the ratio (B/A) of the depth (B) of the taper 14a1 to the center-to-center distance (A) of the two through-holes 14a of the inner link plate 14 on the fatigue performance of the inner link plate 14.

Fatigue performance was evaluated using a conventional fatigue testing machine, in conformity with JIS B 1811:2018, "Fatigue test method for transmission precision roller chains and leaf chains." The analytical fatigue safety factor was then evaluated according to the following criteria. The results are shown in Table 1 and Fig. 11.
- Evaluation Criteria for Fatigue Performance
   ⊚ (Good): when the analytical fatigue safety factor is 2.1 or greater
   ∘ (Acceptable): when the analytical fatigue safety factor is greater than or equal to 2.0 and less than 2.1
   × (Unacceptable): when the analytical fatigue safety factor is less than 2.0

### (Evaluation of Press-Out Force of Bushing)

For the chains of Examples 1 to 12 and Comparative Examples 1 to 6, the press-out force of the bushings was evaluated. Specifically, the influence of the ratio (B/T1) of the depth (B) of the taper 14a1 to the thickness (T1) of the inner link plate 14 on the press-out force of the bushing was evaluated.

To evaluate the press-out force of the bushing, a conventional tensile testing machine was used to measure the press-out force, i.e., the force required to press out the bushing 16 that has been press-fitted into the through-hole 14a of the inner link plate 14. The evaluation was made according to the following criteria. The results are shown in Table 1.

### Evaluation Criteria of Press-Out Force of Bushing

⊚ (Good): when the press-out force is 4.0 kN or greater
∘ (Acceptable): when the press-out force is greater than or equal to 3.0 kN and less than 4.0 kN
× (Unacceptable): when the press-out force is less than 3.0 kN

**Table 1**

| | **Inner Link Plate** | | | | | **Fatigue Performance** | | **Press-out Force** | |
|---|---|---|---|---|---|---|---|---|---|
| | **Thickness (T1)** | **Distance (A) of Through -Holes** | **Taper Depth (B)** | **Ratio (B/A) (%)** | **Ratio (B/T1) %** | **Analytical Fatigue Safety Factor** | **Evaluation** | **Press-out Force (kN)** | **Evaluation** |
| **Example 1** | 3.15 | 25.4 | 0.24 | 0.94 | 7.62 | 2.0 | ○ | 5.8 | ⊚ |
| **Example 2** | 3.15 | 25.4 | 0.32 | 1.24 | 10.00 | 2.0 | ○ | 5.7 | ⊚ |
| **Example 3** | 3.15 | 25.4 | 0.35 | 1.38 | 11.11 | 2.0 | ○ | 5.6 | ⊚ |
| **Example 4** | 3.15 | 25.4 | 0.50 | 1.97 | 15.87 | 2.1 | ⊚ | 5.3 | ⊚ |
| **Example 5** | 3.15 | 25.4 | 0.63 | 2.48 | 20.00 | 2.1 | ⊚ | 5.0 | ⊚ |
| **Example 6** | 3.15 | 25.4 | 0.15 | 2.95 | 23.81 | 2.1 | ⊚ | 4.8 | ⊚ |
| **Example 7** | 3.15 | 25.4 | 0.95 | 3.72 | 30.00 | 2.1 | ⊚ | 4.4 | ⊚ |
| **Example 8** | 3.15 | 25.4 | 1.00 | 3.94 | 31.75 | - | - | 4.3 | ⊚ |
| **Example 9** | 3.15 | 25.4 | 1.05 | 4.13 | 33.33 | 2.2 | ⊚ | 4.2 | ⊚ |
| **Example 10** | 3.15 | 25.4 | 1.15 | 4.53 | 36.51 | 2.2 | ⊚ | 4.0 | ⊚ |
| **Example 11** | 3.15 | 25.4 | 1.30 | 5.12 | 41.21 | 2.1 | ⊚ | 3.1 | ○ |
| **Example 12** | 3.15 | 25.4 | 1.50 | 5.91 | 47.62 | 2.0 | ○ | 3.3 | ○ |
| **Comparative Example 1** | 3.15 | 25.4 | 0 | 0 | 0 | 1.0 | × | 6.3 | ⊚ |
| **Comparative Example 2** | 3.15 | 25.4 | 0.08 | 0.30 | 2.38 | 1.0 | × | 6.2 | ⊚ |
| **Comparative Example 3** | 3.15 | 25.4 | 0.15 | 0.59 | 4.76 | 1.0 | × | 6.0 | ⊚ |
| **Comparative Example 4** | 3.15 | 25.4 | 1.51 | 6.18 | 49.84 | 1.6 | × | 3.1 | ○ |
| **Comparative Example 5** | 3.15 | 25.4 | 1.89 | 1.44 | 60.00 | 1.2 | × | 2.5 | × |
| **Comparative Example 6** | 3.15 | 25.4 | 2.00 | 7.87 | 63.49 | - | - | 2.3 | × |

### Evaluation Results

As shown in Table 1 and Fig. 11, Comparative Examples 1-5 had a ratio (B/A) of less than 0.9% or greater than 6%, and their fatigue performance was rated as "Unacceptable." In contrast, Examples 1-7 and 9-12 had a ratio (B/A) between 0.9% and 6%, inclusive, and their fatigue performance was rated as "Acceptable" or better. In particular, Examples 5-7 and 9-11 had a ratio (B/A) between 2% and 5.5%, inclusive, and their fatigue performance was rated as "Good."

As shown in Table 1, Comparative Examples 5 and 6 had a ratio (B/T1) greater than 50%, and their press-out force was rated as "Unacceptable." In contrast, Examples 1 to 12 had a ratio (B/T1) between 6% and 50%, inclusive, and their press-out force was rated as "Acceptable" or better. Thus, when the press-out force is rated as "Acceptable" or better, that is, when the press-out force is 3.0 kN or greater, disengagement of the bushing 16 from the through-hole 14a of the inner link plate 14 is prevented.

## Claims

1. A chain, comprising:
pairs of inner link plates and pairs of outer link plates alternately arranged in a lengthwise direction of the chain;
cylindrical bushings; and
pins, wherein
the inner link plates in each of the pairs face each other,
the inner link plates each include two through-holes,
the bushings are each inserted into the through-holes of the inner link plates in a corresponding one of the pairs,
the pins are each rotatably inserted into a corresponding one of the bushings,
the outer link plates in each of the pairs sandwich two adjacent pairs of the inner link plates in the lengthwise direction,
the outer link plates in each of the pairs are arranged at opposite ends of a corresponding one of the pins,
the bushings and the pins are arranged such that two of the pins are located between the outer link plates in each of the pairs,
the inner link plates each include a taper at an opening end of each of the two through-holes that faces the outer link plate, and
a ratio (B/A) of a depth (B) of the taper to a distance (A) between centers of the two through-holes in each of the inner link plates is between 0.9% and 6%, inclusive.

2. The chain according to claim 1, wherein
the inner link plates each include a projection that is continuous with the taper, the projection being located on a surface of the inner link plate facing the outer link plate.

3. The chain according to claim 2, wherein
the inner link plates each include the taper, the taper extending along an entire circumference of the opening end, and
the projection is disposed so as to surround an entire circumference of the taper.

4. The chain according to claim 2 or 3, wherein
a ratio (C/A) of a height (C) of the projection to the distance (A) between the centers of the two through-holes in each of the inner link plates is between 0.05% and 0.9%, inclusive.
